(19) **Europäisches Patentamt / European Patent Office / Office européen des brevets**

(11) **EP 1 764 599 A2**

(12) # EUROPÄISCHE PATENTANMELDUNG

(43) Veröffentlichungstag:
**21.03.2007 Patentblatt 2007/12**

(51) Int Cl.:
***G01L 9/06*** *(2006.01)*

(21) Anmeldenummer: **06120444.2**

(22) Anmeldetag: **11.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **14.09.2005 DE 102005043687**

(71) Anmelder: **ROBERT BOSCH GMBH**
**70442 Stuttgart (DE)**

(72) Erfinder:
• **Muchow, Joerg**
**72764, Reutlingen (DE)**
• **Flik, Gottfried**
**71229, Leonberg (DE)**
• **Moersch, Gilbert**
**70563, Stuttgart (DE)**
• **Guenschel, Roland**
**72770, Reutlingen (DE)**
• **Wolff, Janpeter**
**70839, Gerlingen (DE)**

(54) **Sensoranordnung, insbesondere zur Druck- oder Kraftsensierung, und Verfahren zur Herstellung einer Sensoranordnung**

(57) Es wird eine Sensoranordnung und ein Verfahren zur Herstellung einer Sensoranordnung vorgeschlagen, wobei die Sensoranordnung eine Membran und ein mit der Membran verbundenes Sensorelement aufweist, wobei das Sensorelement eine Mehrzahl von piezoresistiven Messbereichen aufweist, wobei das Sensorelement im wesentlichen eine rechteckige oder quadratische Begrenzung mit Begrenzungskanten aufweist und wobei die piezoresistiven Messbereiche jeweils eine Haupterstreckungsrichtung auf oder in dem Sensorelement aufweisen, die mit den Begrenzungskanten einen Winkel von etwa 40° bis etwa 50° aufweist.

Figur 1

EP 1 764 599 A2

**Beschreibung**

Stand der Technik

Die Erfindung geht aus von einer Sensoranordnung nach der Gattung des Hauptanspruchs. Aus der Druckschrift DE 198 33 712 A1 ist eine Druckerfassungsvorrichtung mit einer Metallmembran bekannt, wobei ein Sensorchip auf die Metallmembran aufgebracht ist und in einer bestimmten Weise geformt bzw. ausgerichtet ist. Nachteilig ist hieran, dass die spezifische Formgebung des Sensorchips, die Kristallrichtung und die Orientierung der Widerstände nicht nur die gewünschten Spannungen, sondern auch die ungewollten durch Temperatur hervorgerufenen Spannungen detektiert., außerdem einen erheblichen Aufwand und/oder einen erheblichen Verlust an nutzbarer Chipfläche hervorruft, so dass die bekannte Druckerfassungsvorrichtung mit Kostennachteilen verbunden ist.

Im folgenden werden kristallographische Richtungen und Ebenen wie folgt benannt: () bezeichnen Ebenen, die senkrecht zur entsprechenden Richtung stehen, beispielsweise hat die (001)-Ebene einen <001>-Normalenvektor. ▯ bezeichnet Richtungen und <> bezeichnet Klassen von Richtungen, die äquivalent sind, also <100> entspricht den Richtungen [100], [010], [001].

Vorteile der Erfindung

Die erfindungsgemäße Sensoranordnung und das erfindungsgemäße Verfahren zur Herstellung einer Sensoranordnung mit den Merkmalen der nebengeordneten Ansprüche hat demgegenüber den Vorteil, dass bei minimalen Signalstörungen aufgrund unterschiedlicher thermischer Ausdehnungskoeffizienten mit einfachen Mitteln eine genaue und über lange Betriebszeiten sicher arbeitende Sensoranordnung realisierbar ist. Erfindungsgemäß ist es weiterhin vorgesehen, dass die piezoresistiven Messbereiche in der Nähe des Randes der Membran innerhalb oder außerhalb der Membran vorgesehen sind. Dies hat den Vorteil, dass verschiedene Sensorelemente von identischer Art mit unterschiedlich großen Membranen verwendet werden können, so dass eine leichte Anpassbarkeit der Sensoranordnung an unterschiedliche zu sensierende Druckbereiche bzw. Kraftmessbereiche möglich ist. Dabei ist vorgesehen, dass die Haupterstreckungsrichtung der piezoresistiven Messbereiche mit den Begrenzungskanten einen Winkel von etwa 43 bis etwa 47°, bevorzugt einen Winkel von 45°, bildet. Hierdurch kann in besonderer Weise eine Kompensation von Effekten, die durch unterschiedliche thermische Ausdehnungskoeffizienten hervorgerufen werden, erreicht werden, so dass das Messergebnis der Sensoranordnung in geringerem Maße von störenden Nebeneffekten abhängt. Insbesondere ist es hierdurch möglich, dass sich die thermischen Störungen aufgrund unterschiedlicher longitudinaler und transversaler Materialspannungen unter Betrachtung von wenigstens zwei piezoresistiven Messbereichen in dem Sensorelement im wesentlichen kompensieren. Erfindungsgemäß ist vorgesehen, dass die Messbereiche als n-dotierte Bereiche vorgesehen sind, insbesondere als piezoresistive Messbereiche. Dies hat insbesondere den Vorteil, dass die Richtung maximaler piezoresistiver Koeffizienten, d. h. also maximaler Empfindlichkeit der Widerstände der Messbereiche auf Materialspannungen, mit den Richtungen 45° gegenüber dem Flat, bzw. der Chipkante übereinstimmen können, ohne Nachteile befürchten zu müssen. Will man umgekehrt p-dotierte Widerstände in den Messbereichen verwenden, so bringt die Verwendung von Wafern mit einem Flat in <110>-Richtung den Nachteil mit sich, dass die Richtungen maximaler piezoresistiver Koeffizienten mit den Richtungen senkrecht und parallel zum Flat von Standardwafern, bzw. zur Chipkante übereinstimmen und somit die Begrenzungskanten des Sensorelementes in einem Winkel von ca. 45° zu der Erstreckung des Flats gesägt werden muss, was mit erhöhtem Aufwand verbunden ist, etwa weil Ritzgräben für Teststrukturen dann nur noch schwierig zu benutzen sind und weitere herstellungstechnische Probleme auftreten. Beim Alternativszenario eines Wafers, dessen Flat parallel zu einer <100>-Richtung verläuft, müsste ein erhöhter Aufwand betrieben werden, beispielsweise eine spezielle Prozessfreigabe für solche Wafer, bei denen es sich nicht um Standardwafer handelt.

Erfindungsgemäß ist ferner bevorzugt, dass das Sensorelement aus einkristallinem Siliziummaterial hergestellt vorgesehen ist, wobei bevorzugt die Hauptoberfläche des Sensorelementes einer (100)-Kristallorientierung des Siliziummaterials entspricht. Dies hat den Vorteil, dass die Herstellkosten insofern verringert werden als zur Herstellung des Sensorelementes Standardwafer benutzt werden können mit einer (100)-Kristallorientierung der Hauptoberfläche bzw. der Oberfläche des Wafers und einem Flat, der in <110>-Kristallrichtung geschnitten ist.

Da bei der Fotolitographie die Chiprasterung bevorzugt parallel und senkrecht zur Flatrichtung ausgerichtet wird, sind die beiden Richtungen der Chipkanten nach der Vereinzelung ebenfalls die <110> Richtungen. Die Erfindung geht also von einem Chip aus, dessen strukturierte Oberfläche durch die (100) Ebene gebildet, und die Sägeflächen parallel zu den (011)- und (101)-Ebenen liegen. Dies ist die identische Ausdrucksweise dafür, dass es sich um (100)-Material handelt, welches parallel den <110> Richtungen gesägt wird.

Erfindungsgemäß ist ferner bevorzugt, dass in dem Sensorelement eine elektronische Auswerteschaltung monolithisch mit den Messbereichen integriert angeordnet ist. Dies weist den Vorteil auf, dass für die Auswerteschaltung in oder an der Sensoranordnung kein weiterer Chip bzw. kein weiteres Bauelement mehr notwendig ist, was die Kosten für die gesamte Sensoranordnung senkt und weiterhin Probleme bei der Aufbau- und Verbindungstechnik, insbesondere an bei einer solchen Zwei-Chip-Lösung notwendigen Lötkontaktstellen und dergleichen, vermeidet. Solche Auswerteschaltungen können in bipolaren oder in digitalen Prozessen realisiert werden. Biploare Schaltungen werden bevorzugt auf (100)-Wafern mit einem Flat parallel zu der <110> Richtung prozessiert. Dies ist für den vorliegenden Fall wichtig, da die analogen Signalauswertungen, die in der Sensorik zum Beispiel den Vorteil der schnelleren Signalverarbeitung ermöglichen, durch Bipolarschaltungen realisiert werden.

Erfindungsgemäß ist ferner bevorzugt, dass die Membran als ein Teil eines Sensorträgers vorgesehen ist, wobei der Sensorträger insbesondere einstückig mit der Membran ausgebildet ist und wobei die Membran insbesondere aus einem Stahlsubstrat oder aus einem Keramiksubstrat hergestellt vorgesehen ist. Hierdurch ist es möglich, dass die Sensoranordnung in besonders einfacher und robuster Weise aufgebaut werden kann und darüber hinaus auch in besonders einfacher und robuster Weise an ihren Einsatzort, beispielsweise am Motorblock eines Fahrzeugs oder an der Einspritzanlage eines Fahrzeugs, angebracht und befestigt werden kann, so dass die Funktionalität der Sensoranordnung über die gesamte Betriebsdauer, insbesondere eines Kraftfahrzeugs, gewährleistet werden kann. Vorteilhaft ist die Membran als eine Stahlmembran ausgebildet, so dass besonders hohe Drücke mit der erfindungsgemäßen Sensoranordnung detektierbar sind.

Die Sensoranordnung ist erfindungsgemäß bevorzugt derart vorgesehen, dass das Sensorelement mittels einer Verbindungsschicht mit der Membran verbunden ist, wobei als Verbindungsschicht insbesondere ein Sealglas und/oder ein Klebstoff vorgesehen ist. Dies hat den besonderen Vorteil, dass die Verbindung zwischen dem Sensorelement und der Membran in einfacher kostengünstiger und robuster Weise möglich ist, so dass insgesamt die Sensoranordnung kostengünstig herstellbar ist.

Ein weiterer Gegenstand der vorliegenden Erfindung ist ein Verfahren zur Herstellung der erfindungsgemäßen Sensoranordnung, wobei in einem ersten Schritt das Sensorelement sowie die Membran bzw. der Sensorträger hergestellt werden und wobei in einem zweiten Schritt das Sensorelement mittels der Verbindungsschicht mit der Membran verbunden wird. Besonders bevorzugt ist, dass zur Druck- und/oder Kraftsensierung in unterschiedlichen Druckbereichen Membranen unterschiedlichen Durchmessers und/oder unterschiedlicher Dicke bzw. Sensorträger mit Membranen unterschiedlichen Durchmessers und/oder unterschiedlicher Dicke mit jeweils identischen Sensorelementen verwendet werden. Hierdurch ist es vorteilhaft möglich, dass Entwicklungskosten für die Realisierung einer Sensoranordnung in einem unterschiedlichen Druckbereich dadurch reduziert werden, dass das gleiche Sensorelement Verwendung findet und jeweils mit unterschiedlichen Membranen bzw. Sensorträgern verbunden wird, um unterschiedliche Druckbereiche zu sensieren.

Weiterhin ist es vorteilhaft möglich mithilfe der monolithisch integrierten Auswerteschaltung mit ein und demselben Sensoraufbau verschiedene Nenndruckbereiche zu realisieren, da durch einen in der Auswerteschaltung enthaltenen Abgleich (z.B. variabel einstellbare Verstärkung) der Sensor auf verschiedene Nenndruckbereiche abgeglichen werden kann. So können viele verschiedene Nenndrücke realisiert werden, ohne jeweils eine neue Version des Sensors entwickeln zu müssen. Es wäre z.B. vorstellbar, einen Sensor für den Druckbereich 100-200 bar zu entwerfen, der dann nach Applikation mal auf 120 bar Nenndruck, mal auf 160 bar Nenndruck usw. abgeglichen werden kann.

Zeichnung

Ausführungsbeispiele der Erfindung sind in der Zeichnung dargestellt und in der nachfolgenden Beschreibung näher erläutert.

Es zeigen:

| | |
|---|---|
| **Figur 1** | eine schematische Schnittdarstellung durch eine erfindungsgemäße Sensoranordnung, |
| **Figur 2** | schematische Draufsichten auf eine erste, zweite und dritte Ausführungsform der erfindungsgemäßen Sensoranordnung, |
| **Figuren 3 und 4** | schematische Draufsichten auf eine vierte Ausführungsform der erfindungsgemäßen Sensoranordnung, |
| **Figur 5** | ein Diagramm zur Darstellung der Materialspannung senkrecht zur Chipkante und |
| **Figur 6** | Darstellungen unterschiedlicher Piezosensitivität unterschiedlicher Dotierungen von Messbereichen in unterschiedlichen Kristallorientierungen. |

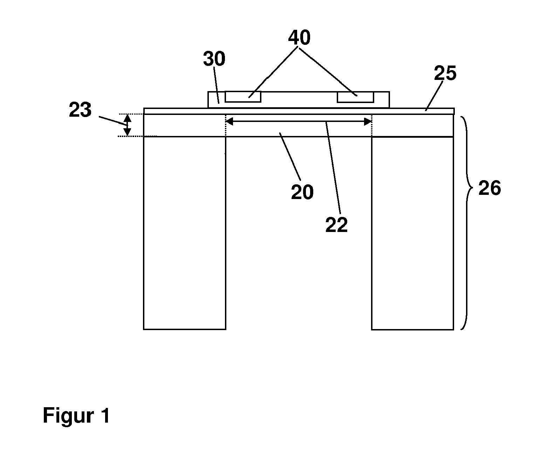

In **Figur 1** ist der grundlegende Aufbau eines erfindungsgemäßen Sensors bzw. einer erfindungsgemäßen Sensoranordnung 10 dargestellt. Eine Membran 20 ist mittels einer Verbindungsschicht 25 mit einem Sensorelement 30 verbunden, wobei das Sensorelement im Folgenden auch als Sensorchip 30 bezeichnet wird. Eine Druckbeaufschlagung bzw. generell eine Kraftwirkung auf eine Seite der Membran 20, insbesondere die dem Sensorelement 30 abgewandte Seite der Membran 20, bewirkt eine Verbiegung der Membran 20, welche sich über die Verbindungsschicht auf das Sensorelement 30 überträgt. Diese Verbiegung des Sensorelements 30 ist piezoresistiv detektierbar. Erfindungsgemäß ist es auch denkbar, dass die Druckbeaufschlagung bzw. die Kraftbeaufschlagung von beiden Seiten der Membran her erfolgt, insbesondere dann, wenn auf der Seite des Sensorelements 30 entweder keine aggressive Umgebung bzw. keine aggressiven Einflüsse herrschen oder aber ein gewisser Schutz auf der Seite des Sensorelements 30 realisiert ist. In diesem Fall ist erfindungsgemäß ein Relativdrucksensor bzw. eine Relativkraftsensor realisierbar.

Erfindungsgemäß ist die Membran 20 insbesondere als Teil eines Sensorträgers 26 vorgesehen, wobei der gesamte Sensorträger 26 in einer bevorzugten Ausführungsform, beispielsweise aus Stahl oder aus einem anderen Material, beispielsweise Keramik oder dergleichen, hergestellt ist.

Aufgrund von unterschiedlichen Ausdehnungskoeffizienten bei einer Temperaturvariation der Membran 20 bzw. generell des Sensorträgers 26 und der Verbindungsschicht 25 sowie des Sensorelements 30 kommt es zu thermomechanischen Spannungen, welchen durch im oder auf dem Sensorelement 30 befindliche piezoresistive Elemente, die im Folgenden zusammenfassend mit 40 bezeichnet sind, detektierbar sind. Diese thermomechanischen Spannungen überlagern sich den eigentlich zu messenden Verbiegungen aufgrund einer Kraftwirkung oder aufgrund einer Druckwirkung auf die Membran 20. Das eigentlich zu messende Signal aufgrund einer Druckänderung bzw. aufgrund eines Drucks kann durch solche thermomechanische Spannung erheblich verfälscht werden. Dieser Effekt tritt umso stärker zu Tage, je näher am Rand des Siliziumchips die piezoresistiven Messelemente bzw. Messbereiche 40 sich befinden bzw. je weiter vom Zentrum des Sensorelements 30 entfernt sich die Messbereiche 40 befinden. Durch eine Reduzierung solcher temperaturabhängiger Störungen (temperaturabhängiger Offset der Brückenspannung bei einer Zusammenschaltung der Messbereiche zu einer Spannungsmessbrücke) ist es möglich, Kosten für einen aufwendigen und ansonsten notwendigen Abgleich eines solchen temperaturabhängigen Offsets einzusparen (Entwicklungskosten, Prozesskosten sowie Kosten in Form von größerer Chipfläche).

Erfindungsgemäß sollen die Messbereiche 40 zur Vermeidung eines temperaturabhängigen Signal-Offsets nicht in die Mitte des Sensorchips 30 verlegt werden, weil dadurch nicht das maximal mögliche von den piezoresistiven Messbereichen 40 lieferbare Signal genutzt werden könnte. Eine weitere Möglichkeit, eine geringere temperaturinduzierte Störung des Drucksignals bei gleichzeitiger vergleichsweise großer Empfindlichkeit des Sensorelements zu erzielen, wäre, mittels einer vergleichsweise dünnen Membran 20 eine vergleichsweise große druckinduzierte Auslenkung der Membran 20 zu erzielen, was jedoch zum einen zu großen Herstellkosten einer solch dünnen Membran führt und zum anderen die Lebensdauer eines solchen Sensors reduzieren würde. Die Membran 20 weist einen Randbereich 21 bzw. einen Membranrand 21 auf. Weiterhin weist die Membran 20 eine Membrandicke 23 und in der Regel einen Durchmesser 22 auf, wobei im Prinzip auch rechteckige, quadratische oder allgemein polygonale Membranen grundsätzlich nicht ausgeschlossen sind, jedoch runde Membranen 20 bevorzugt sind.

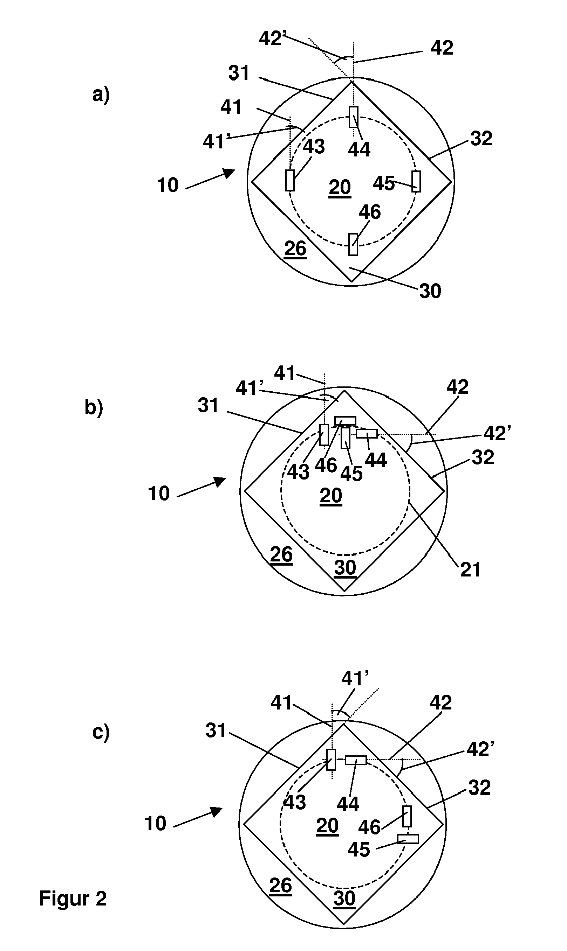

In **Figur 2** sind drei unterschiedliche Ausführungsformen von erfindungsgemäßen Sensoranordnungen 10 dargestellt (**Figuren 2a, 2b, 2c**). Die Messbereiche, die in Figur 1 zusammenfassend mit dem Bezugszeichen 40 bezeichnet sind, sind hier einzeln sichtbar in Form von beispielsweise vier Messbereichen zur Bildung beispielsweise einer Wheatstoneschen Widerstandsbrücke, nämlich ein erster Messbereich 43, ein zweiter Messbereich 44, ein dritter Messbereich 45 und ein vierter Messbereich 46. Diese sind in unterschiedlicher Weise auf bzw. in dem Sensorelement 30 angeordnet, so dass das durch thermisch induzierte mechanische Spannungen im Sensorchip 30 erzeugte Offset-Signal (zusätzlich zu den druckinduzierten Spannungen) möglichst minimal wird. Dazu werden die Messbereiche 40 (piezoresistive Widerstände) so angeordnet, dass sich die Widerstandsänderung von je zwei Widerständen einer Halbbrücke der Widerstandsbrücke hinsichtlich ihres temperaturinduzierten Offset-Signals weitest gehend kompensieren. Dabei behalten sie ihre relative Lage und Richtung zur Membran 20 bzw. zur Bohrung in dem Sensorträger bzw. zum Membranrand 21 bei, so dass sie weiterhin so angeordnet werden können, dass das auszuwertende Signal maximiert wird.

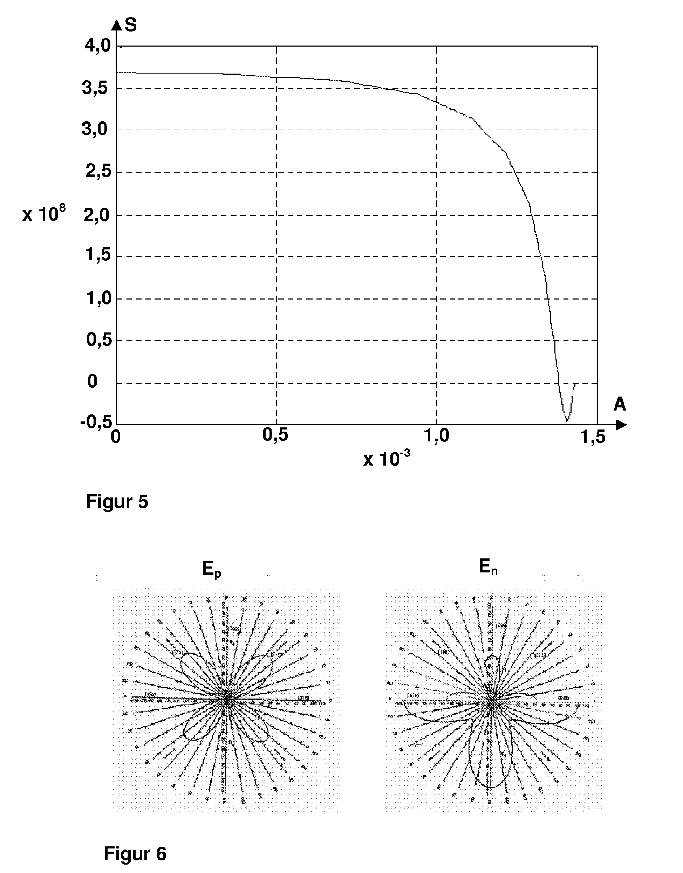

Die erfindungsgemäß optimierte Anordnung der Widerstände beinhaltet bei der ersten, zweiten und dritten Ausführungsform der erfindungsgemäßen Sensoranordnung 10 nicht nur die geographische Lage auf dem Chip bzw. auf dem Sensorelement 30, sondern auch ihre relative Ausrichtung bzw. Orientierung bezüglich der Chipkanten bzw. Begrenzungskanten 31, 32. Die Auswirkung der thermomechanischen Spannungen werden minimal für Messbereiche 43 bis 46, die in einem Winkel von 45° zu den Chipkanten bzw. Begrenzungskanten 31, 32 angeordnet sind. Hierbei wird jeweils auf die Haupterstreckungsrichtung 41 bzw. 42 der Messbereiche 43 bis 46 relativ zu den Begrenzungskanten 31, 32 des Sensorelements 30 abgestellt. Des weiteren muss darauf geachtet werden, dass die Messbereiche 40 ihre Orientierung relativ zur hochsensitiven Kristallrichtung haben. Diese hochsensitive Kristallrichtung ist im Falle einer n-Dotierung die <100>-Richtung und im Falle einer p-Dotierung die <110>-Richtung für Wafer mit (100)-Oberfläche. Hierzu ist in Figur 6 eine schematische Darstellung der unterschiedlichen Piezosensitivitäten von unterschiedlich dotierten Siliziumbereichen dargestellt.

Die Widerstandsänderung eines piezoresistiven Widerstands hängt allgemein von den Spannungen ab, die er in longitudinaler und transversaler Richtung erfährt. Für p-dotierte Siliziumwiderstände sind die piezoresistiven Koeffizienten in der (001)-Kristallebene in <110> -Richtung beispielsweise die Folgenden:

$$\Pi_L = 70 \times 10^{-11} \ Pa^{-1}$$

$$\Pi_T = -66 \times 10^{-11} \ Pa^{-1}$$

Die Änderung eines Piezowiderstands ist dabei im Wesentlichen gegeben durch:

$$\Delta R/R = \Pi_L \ \sigma_L \ + \ \Pi_T \ \sigma_T$$

wobei $\sigma_L$, $\sigma_T$ die relativ zur Stromrichtung herrschende Longitudinal- und Transversalspannung ist. In einem rechteckigen Chip, dessen Kanten die x- und y-Richtung darstellen sollen, herrscht im Wesentlichen eine biaxiale Spannung, deren Verlauf ($\sigma_{xx}$, $\sigma_{yy}$) von der Chipmitte zum Chiprand in Figur 5 näher dargestellt ist. Damit die thermisch eingekoppelte Spannung zu einer möglichst geringen Beeinflussung des von der Wheatstoneschen Brücke generierten Signals führt, müssen die Widerstände bzw. die Messbereiche 40 möglichst vorteilhaft platziert werden. Der Schaltungsaufbau der Wheatstoneschen Widerstandsbrücke ist in den Figuren der Einfachheit halber nicht dargestellt. Zur optimalen Kompensation der temperaturinduzierten Materialspannungen bei gleichzeitig hoher Empfindlichkeit auf druckinduzierte Materialspannungen hin werden die Messbereiche 40 so angeordnet, dass sich die Widerstandsänderung von je zwei Widerständen einer Halbbrücke der Widerstandsbrücke hinsichtlich ihres temperaturinduzierten Offset-Signals weitest gehend kompensieren. Dies kann beispielsweise dadurch erreicht werden, dass die Widerstände so platziert werden, dass sie jeweils den gleichen Abstand bezüglich ihrer Haupterstreckungsrichtung 41, 42 bzw. Longitudinalrichtung und bezüglich ihrer Transversalrichtung zu den jeweiligen Begrenzungskanten 31, 32 haben.

In der **Figur 2a** ist als erste Ausführungsform der erfindungsgemäßen Sensoranordnung 10 eine mögliche solche Anordnung der Messbereiche 40 dargestellt. Die Messbereiche 40 sind sowohl hinsichtlich einer Kompensation der temperaturinduzierten Materialspannungen als auch hinsichtlich einer möglichst großen Empfindlichkeit (nämlich am Rand der Membran 20) angeordnet. Erfindungsgemäß ist es besonders bevorzugt, die Messbereiche 43, 44, 45, 46 mit ihrer Haupterstreckungsrichtung 41, 42 in einem Winkel 41', 42' von etwa 40° bis 50° zu den Begrenzungskanten 31, 32 anzuordnen, wobei Winkel 41', 42' von ca. 45° bevorzugt sind. Bei den Winkeln 41', 42' handelt es sich dabei um die kleinsten Winkel, die zwischen der jeweiligen Begrenzungskante 31, 32 und der jeweiligen Haupterstreckungsrichtung 41, 42 vorliegen (d.h. der kleinere zwischen mehreren komplementären Winkeln). Erfindungsgemäß ist es dann so, dass die longitudinale Spannung $\sigma_L$ und die transversale Spannung $\sigma_T$ etwa gleich groß sind ($\sigma_L = \sigma_T = 0.5 \ (\sigma_{xx} + \sigma_{yy})$). Aufgrund der weitgehenden Kompensation der Auswirkungen von longitudinalen und transversalen temperaturinduzierten Spannungen in einer Widerstandshalbbrücke ist erfindungsgemäß die Signaländerung der Widerstandsbrücke bis zu einem Faktor 10 weniger temperaturabhängig als bei einer Anordnung der Messbereiche parallel und/oder senkrecht zu den Chipkanten. Die erfindungsgemäße Orientierung der Haupterstreckungsrichtungen 41, 42 der Messbereiche 40 relativ zu den Begrenzungskanten 31, 32 des Sensorelements 30 ermöglicht es, die Messbereiche 40 derart "in den Ecken" des Sensorelements 30 anzuordnen (Figur 2c), dass mittels einer senkrecht aufeinanderstehenden Anordnung zweier sich gegenseitig hinsichtlich thermisch induzierten Materialspannungen kompensierende Messbereiche jeweils ein etwa gleicher Abstand zu beiden nächsten Begrenzungskanten für beide Messbereich möglich wird. Durch die Tatsache, dass es möglich ist, die Messbereiche 40 im Vergleich zur Ausdehnung des Sensorelements 30 relativ klein zu machen, werden auch Anordnungen gemäß der **Figur 2b** (zweite Ausführungsform) möglich und günstig. Bei dieser Ausführungsform der Sensoranordnung 10 kompensieren sich hinsichtlich des von der Widerstandsbrücke gelieferten Signals der erste Messbereich 43 und der zweite Messbereich 44 gegenseitig. Weiterhin kompensieren sich der dritte Messbereich 45 und der vierte Messbereich 46. Die zweite Ausführungsform hat gegenüber der ersten Ausführungsform insbesondere Vorteile im Chiplayout, beispielsweise dadurch, dass auf dem restlichen Sensorelement 30 noch Auswerteschaltungen realisiert werden können. Eine Kompromisslösung zwischen der erste und zweiten Ausführungsform (Figuren 2a, 2b) stellt die dritte Ausführungsform gemäß **Figur 2c** dar: Die Widerstandsbrücke ist weitgehend optimal gegenüber thermisch induzierten Spannungen kompensiert, jedoch sind die Messbereiche 40 zumindest teilweise gruppiert, so dass ein relativ großer verbleibender Chipbereich auf dem Sensorelement 30 etwa zur Realisierung einer Auswerteschaltung verbleibt.

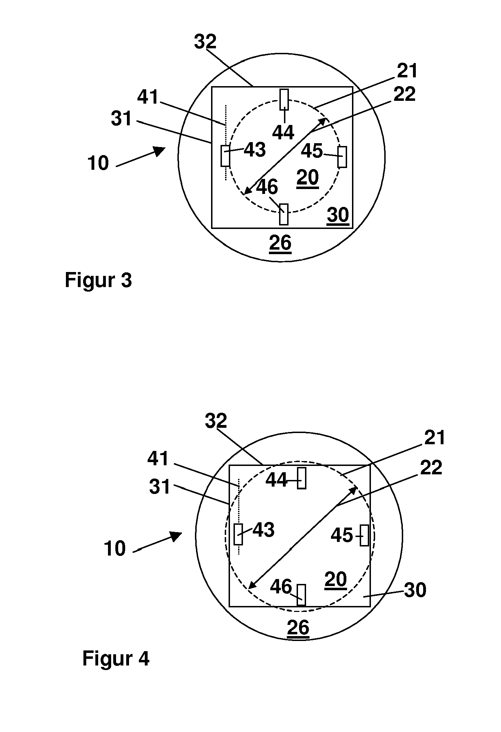

In den **Figuren 3 und 4** sind schematische Draufsichten auf eine vierte Ausführungsform der erfindungsgemäßen Sensoranordnung 10 dargestellt, wobei der erste Messbereich 43, der zweite Messbereich 44, der dritte Messbereich 45 und der sechste Messbereich 46 jeweils eine Haupterstreckungsrichtung 41 aufweisen (lediglich anhand des ersten Messbereichs 43 dargestellt), die parallel zueinander sowie parallel bzw. senkrecht zu den Begrenzungskanten 31, 32 des Sensorchips 30 angeordnet sind. Die Messbereiche 40 sind im Bereich des Membranrandes 21 angeordnet. Aus den Figuren 3 und 4 wird deutlich, dass unterschiedliche Sensorelemente 30 von identischer Art für eine Sensoranordnung 10 mit einer größeren Membran 20 (größerer Membrandurchmesser 22, Figur 4) und mit einer kleineren Membran 20 (kleinerer Membrandurchmesser 22, Figur 3)) verwendbar ist. Hierdurch ergibt sich erfindungsgemäß die Möglichkeit, das Sensorelement 30 für eine Vielzahl verschiedener Druckbereiche zu verwenden und so Entwicklungskosten und Anpassungskosten für jeweils diese Druckbereiche einzusparen, weil lediglich der Sensorträger 26 bzw. die Größe bzw. Dicke der Membran 20 angepasst werden muss. Besonders vorteilhaft ist es erfindungsgemäß, dass bei der vierten Ausführungsform - analog zu der ersten, zweiten und dritten Ausführungsform - auch eine Anordnung der Messbereiche 40 im Winkel von etwa 45° zu den Chipkanten vorgesehen ist (nicht dargestellt). Weiterhin ist es auch bei der ersten, zweiten und dritten Ausführungsform möglich, dass das Sensorelement 30 derart ausgelegt wird, dass es mit unterschiedlichen Sensorträgern 26 für unterschiedliche Druckbereiche verwendet werden kann.

In **Figur 5** ist ein Beispiel der Materialspannung senkrecht zur Chipkante an der Oberfläche eines aus Silizium hergestellten Sensorelements 30 dargestellt. Auf der Ordinatenachse ist die Spannung $\sigma_{xx}$ (Bezugszeichen S) in Pascal aufgetragen, während auf der Abszisse der Abstand (Bezugszeichen A) zur Chipmitte des Sensorelements 30 in Metern aufgetragen ist.

In **Figur 6** sind auf der linken Seite der Darstellung die piezoresistiven Koeffizienten (bei vorgegebener Materialspannung) von p-dotiertem Silizium in unterschiedlichen Kristallrichtungen dargestellt. Man erkennt, dass die Richtungen maximaler Piezoresistivität (d.h. maximaler Empfindlichkeit (Bezugszeichen Ep) eines entsprechend ausgerichteten Messbereichs 40) gerade in <110>-Richtung liegen, d.h. parallel zu einem in <110>-Richtung geschnittenen Flat eines Standardwafers, bzw. zu der in <110> Richtung geschnittener Chipkante.

Auf der rechten Seite der Figur sind die piezoresistiven Koeffizienten (Bezugszeichen $E_n$) von n-dotiertem Silizium dargestellt. Man erkennt, dass die Richtungen maximaler Piezoresistivität genau in <100>-Richtung liegen, d.h. gegenüber den Maxima der Empfindlichkeit für p-dotierte Messbereiche 40 um 45° gedreht.

**Patentansprüche**

1. Sensoranordnung (10), insbesondere zur Druck- oder Kraftsensierung, mit einer Membran (20) und einem mit der Membran verbundenen Sensorelement (30),
wobei das Sensorelement (30)

- ein einkristallines Siliziummaterial mit (100)-Kristallorientierung und
- eine Mehrzahl von piezoresistiven Messbereichen (40, 43, 44, 45, 46) und
- im wesentlichen eine rechteckige oder quadratische Begrenzung mit Begrenzungskanten (31, 32)

aufweist,
wobei jeder der piezoresistiven Messbereiche (41, 42, 43, 44) eine Haupterstreckungsrichtung (41, 42) auf oder in dem Sensorelement (30) aufweist,
wobei die Haupterstreckungsrichtung (41, 42) mit den Begrenzungskanten (31, 32) einen Winkel (41', 42') von etwa 40° bis etwa 50° bildet,
**dadurch gekennzeichnet, dass**
die Messbereiche (40, 43, 44, 45, 46) in <100>-Richtung des Kristalls als n-dotierte Bereiche ausgebildet sind.

2. Sensoranordnung (10) nach Anspruch 1, **dadurch gekennzeichnet, dass** die Haupterstreckungsrichtung (41, 42) mit den Begrenzungskanten (31, 32) einen Winkel (41', 42') von etwa 43° bis etwa 47°, bevorzugt einen Winkel von 45°, bildet.

3. Sensoranordnung (10), insbesondere zur Druck- oder Kraftsensierung, mit einer Membran (20) und einem mit der Membran verbundenen Sensorelement (30),
wobei das Sensorelement (30)

- ein einkristallines Siliziummaterial mit (100)-Kristallorientierung (Seite 2, Zeile 6 bis 8) und
- eine Mehrzahl von piezoresistiven Messbereichen (40, 43, 44, 45, 46) aufweist,

wobei die Messbereiche die in der Nähe des Randes der Membran (20) außerhalb der Membran (20) vorgesehen sind,
**dadurch gekennzeichnet, dass**
die Messbereiche (40, 43, 44, 45, 46) in <100>-Richtung des Kristalls (Seite 7, Zeile 10 bis 12) als n-dotierte Bereiche vorgesehen sind.

4. Sensoranordnung (10) nach einem der vorhergehenden Ansprüche, **dadurch gekennzeichnet, dass** in dem Sensorelement (30) eine elektronische Auswerteschaltung (50) monolithisch mit den Messbereichen (40, 43, 44, 45, 46) integriert angeordnet ist.

5. Sensoranordnung (10) nach einem der vorhergehenden Ansprüche, **dadurch gekennzeichnet, dass** die Membran (20) als ein Teil eines Sensorträgers (26) vorgesehen ist, wobei der Sensorträger (26) insbesondere einstückig mit der Membran (20) ausgebildet ist und wobei die Membran (20) insbesondere aus einem Stahlsubstrat oder aus einem Keramiksubstrat hergestellt vorgesehen ist.

6. Sensoranordnung (10) nach einem der vorhergehenden Ansprüche, **dadurch gekennzeichnet, dass** das Sensorelement (30) mittels einer Verbindungsschicht (25) mit der Membran (20) verbunden ist, wobei als Verbindungsschicht (25) insbesondere ein Sealglas und/oder ein Klebstoff vorgesehen ist.

7.  Verfahren zur Herstellung einer Sensoranordnung (10) gemäß einem der vorhergehenden Ansprüche, **dadurch gekennzeichnet, dass** in einem ersten Schritt das Sensorelement (30) sowie die Membran (20) bzw. der Sensorträger (26) hergestellt werden und dass in einem zweiten Schritt das Sensorelement (30) mittels der Verbindungsschicht (25) mit der Membran (20) verbunden wird.

8.  Verfahren nach Anspruch 8, **dadurch gekennzeichnet, dass** zur Druck- oder Kraftsensierung in unterschiedlichen Druckbereichen Membranen (20) unterschiedlichen Durchmessers (22) und/oder unterschiedlicher Dicke (23) bzw. Sensorträger (26) mit Membranen (20) unterschiedlichen Durchmessers (22) und/oder unterschiedlicher Dicke (23) mit jeweils identischen Sensorelementen (30) verwendet werden.

**Figur 1**

Figur 2

**Figur 3**

**Figur 4**

**Figur 5**

$E_p$  $E_n$

**Figur 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19833712 A1